# EUROPEAN PATENT SPECIFICATION

(11) **EP 2 384 630 B1**
(45) Date of publication and mention of the grant of the patent: **04.10.2017**
(21) Application number: 10305463.1
(22) Date of filing: 30.04.2010
(51) Int. Cl.: A21D 13/00, A21D 13/80, A21D 13/19

(54) **Soft cake with simulated unbaked heart**
Weicher Keks mit simuliertem ungebackenen Herz
Gâteau mou avec coeur façon non cuit

(43) Date of publication of application: 09.11.2011
(73) Proprietor: Generale Biscuit, 92140 Clamart (FR)
(72) Inventor: Borges, Rui Cesar, 91260, Juvisy sur Orge (FR); Kintzig, Olivier, 94200, Ivry sur Seine (FR)
(74) Representative: Hoffmann Eitle

(56) References cited:
- EP-A2- 1 036 501
- EP-A2- 1 036 504
- WO-A2-2008/024907

## Description

The present invention is directed to a chocolate soft cake having appropriate shelf life and comprising outer layers of baked dough in direct contact with an inner core or "heart" which resembles the unbaked dough of the soft cake. In particular, the soft cake of the invention is a brownie-type pastry wherein the core of the pastry simulates the unbaked heart commonly known from a fresh piece of brownie. The present invention further relates to a process for producing the soft cake of the invention.

### Background of the Invention

Soft cake such as brownies is conventionally manufactured by preparing the dough, spreading the dough in a mold or on a tray so as to obtain a dough layer, and baking the dough in an oven. It may be desirable to adjust the dough and/or the baking conditions such that the top and bottom parts of the dough layer are fully baked, whereas the center part of the dough layer maintains a moist and almost unbaked appearance, i.e. the appearance of an "unbaked heart". This may be particularly so if the soft cake is a brownie-type pastry based on a cocoa- or chocolate-containing dough, so that the center part of the dough layer after baking maintains a chocolate fudge-like appearance.

When the dough and/or baking conditions in the manufacture of a conventional soft cake are adjusted appropriately for obtaining an unbaked heart characteristic which persists for several weeks after baking, the soft cake will commonly have a water activity (Aw) of considerably more than 0.84. At such high water activity, the soft cake will have no appropriate shelf life, e.g., a shelf life of more than two months, or more than four months, or even more than six months, unless preservatives are used (most bacteria do not grow at water activities below 0.91, and most molds cease to grow at water activities below 0.70).

Shelf life may be improved by reducing the water activity of the dough or by extending the baking time and/or increasing the baking temperature, both of which will reduce the water activity of the final pastry. However, the improvement in shelf life is achieved at the expense of the sensory properties of the pastry, as the unbaked heart characteristics are lost, i.e. the dough will become fully baked.

EP 1 036 501 relates to a low moisture cheesecake product having extended shelf life stability. The product includes a crust having a water activity of from about 0.40 to about 0.86, and a cheesecake filling having water activity of from about 0.76 to about 0.86. The filling comprises less than about 60% by weight cream cheese and includes ingredients that contribute to a lowering of the water activity of the cheesecake product. The water activity of the finished cheesecake product ranges from about 0.60 to about 0.86. The shelf stability of the cheesecake product is at least about 3 months at refrigerated temperature.

In view of the above, the present inventors looked for a means to prepare a soft cake product having an appropriate shelf life and exhibiting the "unbaked heart" characteristic known from fresh brownie-type pastry. As a result of their efforts, they found that this object can be accomplished by producing a soft cake from at least two dough layers with an intermediate filling layer.

### Summary of the Invention

In a first aspect, the present invention is directed to a process for the manufacture of a shelf stable chocolate soft cake comprising the steps of
- depositing a first layer of dough material,
- depositing a layer of filling material on top of the first layer and
- depositing a second layer of dough material on top of the layer of filling material,
   wherein at least one of the first and second layers of dough material is in direct contact with the layer of filling material, and
- baking the combined deposited layers to produce a soft cake, wherein the dough layers become cooked and the filling layer simulates an unbaked heart of dough,
   wherein
   the dough material comprises 5 to 35 wt.% of chocolate,
   the filling material is a chocolate filling comprising at least 1 wt.% of cocoa solids,
   the water activity of the filling material is in the range of from 0.65 to 0.84,
   the water activity of the soft cake is in the range of from 0.65 to 0.84,
   the filling material is not a dough material, and when packaged, no development of mould is visible after storage of the soft cake at 25 °C for two months.

In a second aspect, the present invention is directed to a chocolate soft cake comprising a first layer of baked dough material, a layer of chocolate filling material on top of the first layer and a second layer of baked dough material on top of the layer of filling material, wherein the dough material comprises 5 to 35 wt.% of chocolate, the chocolate filling material comprises at least 1 wt.% of cocoa solids and simulates an unbaked heart of dough, at least one of the first and second layers of baked dough material is in direct contact with the layer of filling material, the water activity of the soft cake is in the range of from 0.65 to 0.84, the filling material is not a dough material, and, when packaged, no development of mould is visible after storage of the soft cake at 25 °C for two months. The soft cake of the second aspect of the invention is obtainable by the process of the first aspect of the invention.

In accordance with the invention, it has become possible to provide a soft cake having an appropriate shelf life and exhibiting a core or "heart" which resembles or "simulates" unbaked dough.

### Description of Figures

Figure 1 is a schematic diagram of an embodiment of the process of the invention.
Figure 2 is a schematic diagram comparing embodiments of manufacture of pieces of soft cake with predetermined breaking points (top and middle: prior art; bottom: in accordance with one aspect of the invention).

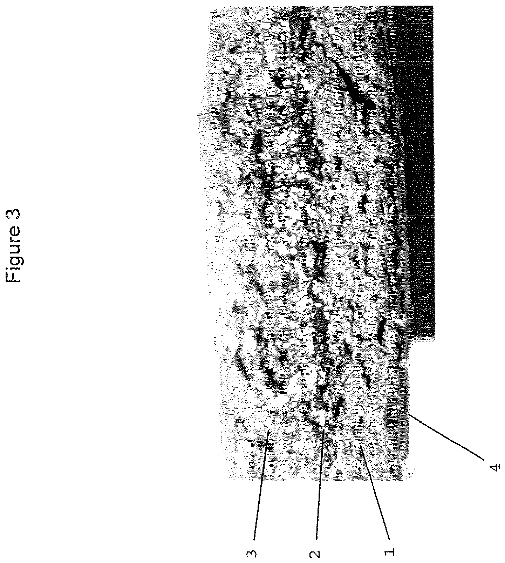

Figure 3 is a photograph of a cross section through a brownie soft cake of the present invention, comprising a first baked dough layer 1, a filling layer 2 and a second baked dough layer 3. The brownie soft cake is provided on a baking paper 4.
Figure 4A is a schematic presentation of an embodiment of the soft cake of the present invention wherein the filling material layer 2 covers substantially all of the surface of the first and second dough material layers 1, 3 and wherein the dough material layers do not contact each other.
Figure 4B is a schematic presentation of an embodiment of the soft cake of the present invention wherein the first and second dough material layers 1, 3 contact each other on the outer edges such that the filling material layer 2 is fully enclosed.

### Detailed Description of the Invention

In general, at least one of the first and second layers of baked dough material in the soft cake in accordance with the invention is in direct contact with the filling material. The filling material is not a dough material and, therefore, does not substantially change its texture during baking. The filling material in the soft cake of the invention is generally not perceived as a separate layer, but rather as part of at least one of the first and second dough layers which is still in a moist and unbaked condition. In this regard, the texture of the soft cake of the invention, as reflected e.g. by penetrometry, changes gradually and not abruptly when advancing perpendicularly through the layers of baked dough and filling.

### Dough material

For the purpose of the present invention, the dough material used for the first and second layers of the soft cake is characterized by its general liquid, viscous texture prior to baking, thereby enabling its automated deposition by conventional extrusion or rolling. In contrast, a layer of baked dough has no liquid properties any longer and has a solid, although usually porous texture.

The dough material may be prepared with ingredients that are typical for soft cakes. For instance, the dough material may comprise a starch source, e.g. a flour, sweetening agent, such as sugar and/or an artificial sweetener, fat, e.g. oil, hard fat and/or butter, eggs, e.g. whole eggs, egg yolk and/or egg white, preferably eggs in liquid form (which may be pasteurized), flavoring additives and bakery improvers such as raising agents.

The starch source may be, e.g., one or more selected from a cereal flour, tapioca starch and potato starch. Cereal flours may be selected from rice flour, wheat flour and maize starch. Preferably, the starch source is wheat flour.

The sweetening agent may be provided, for example, in the form of sugar and/or glucose syrup.

The fat may be selected from one or more of vegetable fats, animal fats, vegetable oils, animal oils and butter.

The raising agent may be, e.g., a chemical leavening agent or whipped egg white.

The dough may also comprise one or more preservatives. However, it is preferred not to use preservatives in the present invention, in particular preservatives which are legally required to be indicated as such on the product packaging.

The dough material may also comprise, e.g., one or more ingredients selected from cocoa powder and nuts. Nuts may be in whole, minced or ground form. Examples of suitable nuts are almonds and hazelnuts.

In general, the dough material comprises from 5 to 35 wt.% of chocolate, or the corresponding amount of cocoa powder. In a preferred embodiment, the dough material is a brownie dough and comprises 5 to 30 wt.% of chocolate, more preferably 12 to 25 wt.%, even more preferably 15 to 20 wt.%, or the corresponding amount of cocoa powder. The chocolate may be in the form of a molten liquid chocolate, ground chocolate powder or chocolate drops. For reasons of taste and/or coloring, cocoa powder may be present in the dough material in an amount of from 0 to 10 wt.%. In this embodiment, the dough material preferably comprises a starch source in an amount of 20 wt.% or less, or 15 wt.% or less, but preferably in an amount of 5 wt.% or more, and more preferably 8 to 12 wt.%. Preferably, the starch source is wheat flour. Further, the dough material in this embodiment preferably comprises 5 to 25 wt.% of eggs, more preferably 10 to 20 wt.%, even more preferably 13 to 18 wt.%. The eggs may be in a pasteurized liquid form. The dough material in this embodiment preferably comprises 20 to 40 wt.% of sugar, more preferably, 25 to 35 wt.% and even more preferably 27 to 33 wt.%. Fat is preferably used in this embodiment in an amount of from 10 to 25 wt.%, more preferably 15 to 20 wt.%, in terms of separately added fat, excluding fat derived from other components such as eggs and/or chocolate.

Prior to depositing the dough material for the first and second layers, the ingredients of the dough material are blended appropriately. As is known in the art, it may be preferable to prepare a premix of a selection of the ingredients of the dough material and subsequently add the remaining ingredients to the premix, or vice versa.

The dough material preferably has a water activity Aw of from 0.65 to 0.84, more preferably 0.70 to 0.83, more preferably 0.75 to 0.83 and even more preferably in the range of from 0.81 to 0.83, and may have a moisture content of from 12 to 30 wt.%, for example. The water activity of the dough material, which is the one determined in the dough material immediately prior to its deposition, may be adjusted by means of the proportion of, e.g., water and optional humectant, such as glycerol and/or sorbitol. For facilitating the deposition of the first and second layers, the viscosity of the dough material at the time of its deposition as first and second layers is preferably 500 Pa·s or less, more preferably in the range of from 200 to 300 Pa·s, when measured as explained in the experimental section below. Finally, the relatively low viscosity may help in blurring the texture transition from the baked dough to the filling layer after baking and, thus, contributing to the "simulated unbaked heart" aspect of the invention. After baking, the viscosity of the dough material cannot be measured any longer.

The dough material used for the first layer may be different from the dough material used for the second layer. In a preferred embodiment, the same dough material is used for the first and second layers.

### Filling material

The filling material used in the present invention is characterized by its water activity, which is in the range of from 0.65 to 0.84, and by the fact that it is not a dough material. That is, while the general properties of the filling material may be affected by the baking step, the viscosity of the filling material remains substantially constant. In this regard, the filling material may be described as a cream, fudge or sauce. Unlike the baked dough of the first and second layers, the filling material, after having been subjected to the baking conditions, does not disintegrate into crumbs upon mechanical impact.

The filling material may be prepared with ingredients that are typical for a cream, fudge or sauce. For instance, the filling material may comprise fat, e.g., oil, hard fat and/or butter, sweetening agent, such as sugar and/or an artificial sweetener, water, thickener, humectant, such as glycerol and/or sorbitol, and flavoring additives. In a preferred embodiment, the ingredients and their respective amounts in the filling material are selected such that the filling material is bake stable. In particular, it is preferred that the filling material does not boil under the baking conditions.

Unless indicated otherwise, examples of the ingredients of the filling material are the same as provided for the dough material above.

The thickener may be selected from, e.g., microcrystalline cellulose and carboxy methyl cellulose and mixtures thereof, and may be used for maintaining bake stability of the filling. It may be preferable to use not more than 10 wt.% of thickener, more preferably not more than 5 wit.%, in order to maintain the moist and unbaked appearance of the filling material after baking. The amount and type of thickener can be selected in conventional manner in order to adjust the viscosity and texture of the filling material, including securing bake stability. In addition, it is possible to add a starch source, including uncooked flour as well as soft cake which may be recycled from the cutting, i.e. trimming, of the final product prior to packaging. It is preferable to use not more than 10 wt.% of uncooked starch (in terms of starch carbohydrates), preferably not more than 5 wt.%. The expression (uncooked) "starch" as used in this context refers to starch in its chemical sense. For example, flour and natural starch ingredients such as potato starch or corn starch contain components other than starch carbohydrates and may, thus, be used at somewhat more than 10 wt.% while still satisfying the preferred condition of "not more than 10 wt.% of uncooked starch".

The filling material may also comprise, e.g., one or more ingredients selected from cocoa powder and nuts. Nuts may be in whole, minced or ground form. Examples of suitable nuts are almonds and hazelnuts.

In a preferred embodiment, the ingredients of the filling material are selected such that the visual appearance of the filling material, in particular its color, is similar to that of the dough material before baking, resulting in a slightly darker color after baking. Thus, the "simulated unbaked heart" aspect of the present invention will be even more pronounced in the final product, as the consumer will not perceive the filling material as a separate layer. The visual appearance of the filling and dough materials may be aligned to each other by using appropriate coloring ingredients in each material, e.g., chocolate and/or or cocoa powder.

The filling material is a chocolate filling comprising at least 1 wt.% of cocoa solids, which may be introduced in the form of, e.g., cocoa powder or chocolate. The proportion of cocoa solids may preferably be up to 10 wt.%. When the cocoa solids are added in the form of chocolate, a preferred range of the amount of chocolate is from 5 to 40 wt.%. The chocolate may be in the form of a molten liquid chocolate, ground chocolate powder or chocolate drops.

In a preferred embodiment, the filling material is in the form of an oil-in-water emulsion, using one or more conventionally known emulsifiers, such as sucrose esters of fatty acids.

Prior to depositing the filling material, the ingredients of the filling material are blended appropriately. As is known in the art, it may be preferable to prepare a premix of a selection of the ingredients of the filling material and subsequently add the remaining ingredients to the premix, or vice versa. Alternatively, the filling material may be a commercially available product, such as a bake stable chocolate cream or chocolate fudge.

In a preferred embodiment of the invention, the viscosity of the filling material is similar to the viscosity of the dough material, i.e. the dough material which is in direct contact with the filling material. More preferably, the viscosity of the filling material is substantially equal to or slightly higher than the viscosity of the dough material, such as within a range of ±30% of the dough material viscosity, preferably within a range of ±20%, or ±10%, thus helping to prevent mixing of the materials.

The water activity of the filling material, which is the one determined in the filling material immediately prior to its deposition, is generally in the range of from 0.65 to 0.84, preferably 0.70 to 0.78 and more preferably 0.73 to 0.76. The moisture content of the filling material may be in the range of, e.g., 10 to 40 wt.%, preferably 20 to 35 wt.%. The water activity of the filling material may be adjusted by means of the proportion of, e.g., water, thickeners and optional humectant, such as glycerol or sorbitol.

### Deposition of layers

The product of the present invention is generally obtained by a layering technique, wherein the dough material and filling material is deposited in the form of substantially flat, horizontally extended layers prior to baking, so that the respective layers are substantially parallel to each other. This technique is distinguished from an injection technique and a technique of "layering-after-baking". In the injection technique, a filling material is injected in liquid form in a baked or unbaked dough material, such as known from filled donuts. This technique is not suitable for producing a substantially flat, extended soft cake pastry. Moreover, the injection technique after baking always leaves an undesirable visible imprint on the final product. In the layering-after-baking technique, the dough material is formed into layers which are baked to form baked soft cake layers. Subsequently, the filling material is coated on one of the soft cake layers, and a second soft cake layer is deposited on the coating of filling material. This technique is less suitable for fragile soft cake like for instance Brownies and does not produce the desired simulated unbaked heart texture, as it lacks the gradual transition from baked dough to filling material.

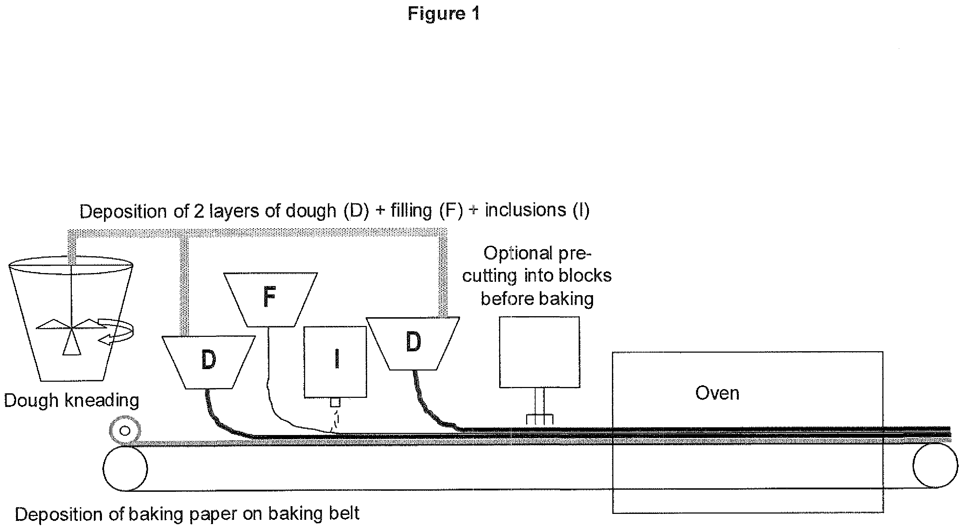

An exemplary embodiment of the process of the present invention is shown in Figure 1.

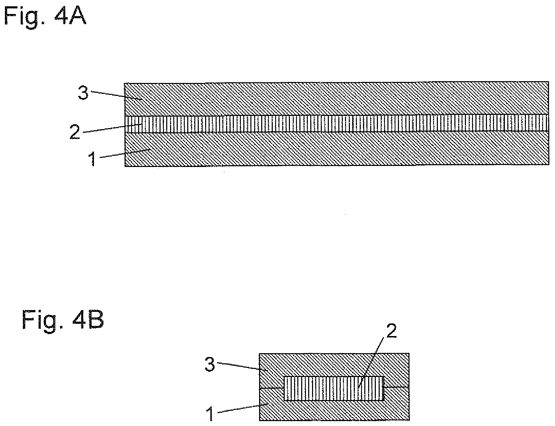

The deposition steps of process of the invention are carried out such that at least one of the first and second layers of dough material is in direct contact with the layer of filling material. In one embodiment of the invention, the filling material covers substantially all of the surface of the dough material layer. The expression "substantially all of the surface of the dough material layer" is used herein to designate an area of contact of at least 80%, preferably at least 90%, even more preferably at least 95%, or at least 98%, or at least 99% of the surface area of the dough material (accounting for the surface area of that side of the dough material layer which faces the layer of filling material). Preferably, the layer of filling material is in a continuous and closed form, as opposed to the form of a grid or stripes of material. Preferably, both layers of dough material are in direct contact with the layer of filling material, i.e. the filling material is contacted on both sides with a dough material layer. In this embodiment, it may also be preferable for the first and second layers of dough material to not contact each other on the outer edges of the soft cake and it may even be more preferred to trim away uneven outer edges where such contact occurs, either prior to or after baking (see Fig. 4A). If there is only one direct contact, there may be one or more further layers of another material sandwiched between the filling material layer and the other dough material layer. In this case, the direct contact may be with either the first layer or the second layer of dough material. The material of the further layer(s) may be any suitable food material, e.g., a layer of solid or liquid chocolate, jam, jelly, marzipan, or icing, or a combination thereof.

In another embodiment of the invention, the first and second layers of dough material may contact each other on the outer edges of the soft cake of the present invention such that the filling layer is fully or partially enclosed. For example, if the soft cake is produced by continuous deposition of the layers on a belt, the first and second layers of dough material may contact each other on the outer edges which run parallel to the direction of the belt, thus partially enclosing the filling layer. Alternatively, the contact is on all outer, circumferential edges of the dough material layers so as to fully enclose the filling layer and form, after baking, a ready-to-eat piece of soft cake (see Fig. 4B). The contact may be established either at the time of depositing the second layer of dough material, or at the time of baking, i.e. when the dough material of the first and second layers increases in fluidity, extends beyond the filling layer and converges. In this embodiment, it may be preferable to produce the pieces of soft cakes in a baking tray or belt containing separate moulds. In this case, the process comprises the steps of depositing a first layer of dough material in the mould, depositing a layer of filling material on top of the first layer and depositing a second layer of dough material on top of the layer of filling material, wherein at least one of the first and second layers of dough material is in direct contact with the layer of filling material and wherein the first and second layers of dough material contact each other on all outer, circumferential edges.

The process and soft cake of the present invention include an embodiment where a particulate material, i.e. "inclusions", are dispersed between the layer of filling material and one or both of the first and second layers of dough material. Such inclusions may be, e.g., chocolate flakes or drops, whole or minced nuts, etc., or a mixture thereof Inclusions are not considered as hindering the direct contact between the filling layer and a dough layer as long as they do not form a continuous, impenetrable layer. In one embodiment, chocolate drops and/or nuts are used as inclusions in an amount of from 5 to 9 wt.%, based on the total weight of the soft cake material.

In one embodiment, the invention contemplates the provision of one or more further layers of one or more other food materials on those surface(s) of either one of the first and second layers of dough material which do not face the layer of filling material.

In the process of the present invention, each layer of the soft cake is deposited in a substantially flat, horizontally extended form. The deposition of the layers can be performed in any conventionally known manner, e.g., by extruding the material of the layer through a flat die, e.g., a sheet extrusion die, or by rolling the material. The selection of the specific deposition means to be used for a certain layer will be carried out by the skilled person in a conventional manner, taking into account the properties of the layer material, such as viscosity, stickiness etc., and the desired characteristics of the deposited layer, such as thickness.

In one embodiment, the lowermost layer of the soft cake material, e.g., the first layer of dough material, is deposited on a support, such as a baking tray or an endless conveyor belt. The dimensions of the support, i.e. width and length of a baking tray or pan, or width of a conveyor belt, may be selected in accordance with the desired soft cake dimensions. For example the width of the conveyor belt may be selected such that it can accommodate an integral number of pieces of soft cake after cutting. For automated manufacture, it may be preferred to use an endless conveyor belt which simultaneously serves as a support in the baking step and, optionally, in the cutting and packaging of the soft cake produced. The support preferably has a flat and even shape. However, embodiments may be contemplated wherein the support has a texture, such as a wavelike form or grating, so as to influence the form or surface appearance of the subsequently deposited layer(s).

In a preferred embodiment, a baking paper is placed on the support, prior to depositing the lowermost layer of the soft cake material. The baking paper may be in a continuous form, released from a roll, and will usually help to prevent the sticking of the soft cake material to the support. Moreover, it may be used as a support for the final soft cake. In this embodiment, the soft cake will stay on the baking paper after the baking step, so that the soft cake, optionally after cutting into pieces of a desired size, can be packaged together with the baking paper.

Any subsequent layer, such as the layer of filling material, the second layer of dough material and any further optional layer(s) of another material, is deposited on the lowermost layer of the soft cake material in a corresponding manner, using the same or corresponding deposition means selected in accordance with the properties of the specific layer material. In one embodiment, two or more layers may be formed and deposited, either on the support or on a lower layer, by means of a coextrusion die. That is, layers may be deposited in a subsequent or simultaneous fashion.

Inclusions may be incorporated between any first and second layers of material by dispersing them after the deposition of the first layer and prior to the deposition of the second layer. For manufacturing purposes, it may be preferable to incorporate the inclusions between the layer of the filling material and the first and/or second layers of dough material.

The amount of material deposited for each layer will be selected in accordance with the desired layer thickness in the final product, taking into account a potential raising of the layer during baking as observed, e.g., in dough layers. In one embodiment, in particular when preparing a brownie-type soft cake, the total thickness of the layers is adjusted such that the final soft cake after baking has a thickness in the range of from 0.5 to 7 cm, preferably 1 to 4 cm, more preferably 1,5 to 3 cm. The thickness of the layer of filling material is adjusted such in the deposition step that the simulated heart aspect of the invention is accomplished after baking, as opposed to the appearance of a separate layer of filling material. In this regard, the filling material may be deposited with a thickness which amounts to a range of from 5 to 50% of the total thickness of the soft cake, preferably 5 to 30%, more preferably 5 to 20%, or 10%. It has been found that consumers prefer thicker soft cakes over thinner versions, especially with regard to brownie-type soft cakes.

### Baking

After the deposition of the first and second layers of dough material and the layer of filling material, as well as any further optional layers which are desired to be included at this stage, the combined layers are subjected to the baking step. The baking step is carried out in a conventionally known manner, e.g., in an oven for batch-wise or continous operation, using a temperature and time profile adjusted to the properties of the deposited material layers and the desired soft cake characteristics. In particular, the baking conditions will be selected such that the dough layers become cooked and the filling layer simulates an unbaked heart of dough. In general, the baking conditions will be adjusted such that the water activity of the soft cake after baking is in the range of from 0.65 to 0.84, preferably 0.70 to 0.80, more preferably 0.72 to 0.78 and even more preferably 0.75 to 0.77.

### Further processing

After the baking step, it is possible to deposit one or more additional layers of material or disperse particular material on the soft cake, such as an icing layer, whole or minced nuts or chocolate flakes or chips.

The soft cake exiting from the baking step can be cut into pieces and packaged in a conventionally known manner.

In general, it is preferred to take the necessary measures to avoid microbial contamination during any of the processing steps for producing the soft cake of the present invention.

### Pre-cutting before baking

In one embodiment of the process of the present invention, the combined deposited layers of dough material and filling material are pre-cut prior to the baking step. It has been found by the present inventors that such a cutting step can provide a soft cake product with predetermined breaking points (lines) after baking, even though the top layer appears to be contiguous, as the cut dough material will join together after the cutting step, either because of its inherently low viscosity, or because of the flow of the dough during baking.

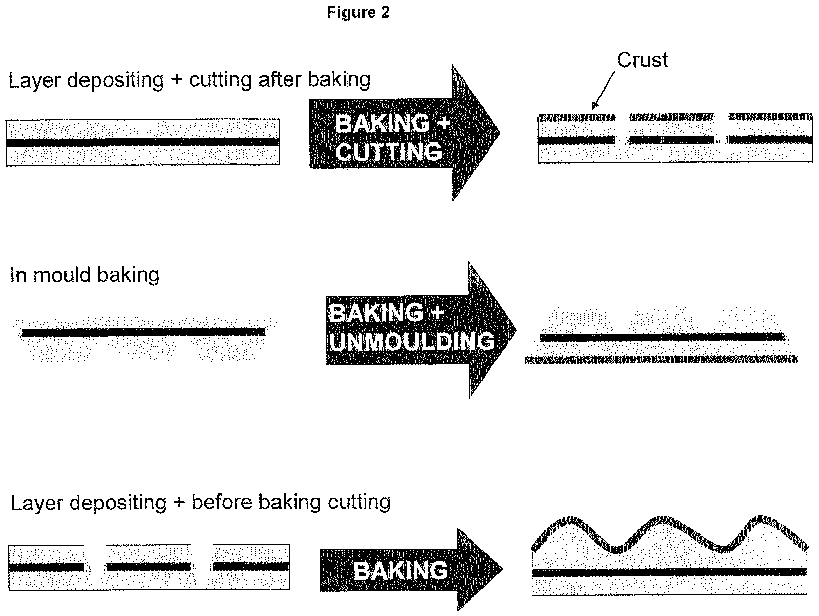

In the art, there are other methods known for preparing a soft cake pastry with predetermined breaking points (see Figure 2). For example, the soft cake may be cut after baking (Figure 2, top), or the soft cake may be produced in baking molds (Figure 2, middle). In the first case, the cutting after baking may result in a product exhibiting a visual appearance which reflects its industrial, automated manufacture. In the second case, unmolding of the cooked soft cake may be difficult and result in breakage of the product. Moreover, the top crust of the pastry obtained during baking is turned upside down during unmolding, thus exposing the flat surface of the dough which touched the mold surface during baking. Again, this provides a product exhibiting an appearance of industrial, automated production.

In contrast, as shown in Figure 2, bottom, the inventors found that the "cutting before baking" feature provides the final soft cake with an artisan or hand-made appearance, having the top crust obtained during baking still on the top side of the pastry and showing slightly visible predetermined breaking points.

The cutting prior to baking can be carried out with any conventionally known means, e.g., a knife, wire or cutting wheel. In one embodiment, the cutting step is carried out with a wedge-like tool for producing an incision or score line in the deposited layers of dough and filling material. The cutting can be carried out to a specified depth of the deposited layers, e.g., through substantially all of the deposited layers, or through the uppermost dough layer, or through the uppermost dough layer and the filling layer.

The further processing of the deposited and cut layers, i.e. baking and packaging, can be carried out in a conventionally known manner, as described above. Evidently, the cutting of the soft cake after baking will be carried out only to the extent that larger blocks of soft cakes are produced, containing still smaller pieces of soft cake which are only separated by the predetermined breaking points.

### Soft cake

The soft cake according to the second aspect of the present invention is obtainable by employing the process of the first aspect of the present invention. Preferably, it is obtained by the process of the present invention. In particular, it is obtained in a combined baking step including the deposited layers of first and second dough material and the deposited layer of filling material. More preferably, the soft cake of the invention is a chocolate soft cake, in particular a brownie-type pastry. A chocolate soft cake will usually contain at least 1 wt.% of defatted cocoa solids (which may be derived from any ingredient of the soft cake, such as chocolate, cocoa powder, inclusions, etc.). In a preferred embodiment, the brownie-type pastry contains from 5 to 30 wt.% of chocolate, based on the final pastry product and accounting for any chocolate ingredient, e.g. contained in the dough material, filling material, inclusions, etc. The chocolate content will usually depend on the pastry quality (grade), i.e. it is preferably in the upper range for a premium product. More preferably, the brownie-type pastry contains from 12 to 28 wt.% of chocolate, even more preferably from 16 to 28 wt.%.

The baked dough layers, filling layer and further optional layers as well as inclusions are defined as described above. In particular, the soft cake has a water activity Aw in the range of from 0.65 to 0.84, preferably 0.70 to 0.80, more preferably 0.72 to 0.78 and even more preferably 0.75 to 0.77.

The soft cake is a shelf stable product. When packaged, it has a shelf life of two months or more, preferably 4 months or more, or 6 months or more, meaning that no development of mould is visible after storage at 25 °C for the indicated period of time.

### Examples

### Water activity

Water activity (Aw) of a material in the present application relates to the ratio between the vapor pressure of the water in the material and the vapor pressure of pure water at the same temperature. Aw values indicated here are those measured at a temperature of 25 °C. Water activity can be measured with commercially available equipment, such as available from Novasina.

Aw values of the dough material used in the present invention are those obtained with the dough at the time immediately prior to the deposition step. Aw values for the filling material used in the present invention are those obtained with the filling material immediately prior to the deposition step. Aw values for the soft cake indicated in this application are those obtained with the final soft cake after baking and equilibration, i.e. three weeks or more after baking.

### Viscosity

Viscosity values indicated in this application refer to the viscosity measured at a temperature of 20°C, using a Brookfield viscometer with a module 7 cylinder at a rotational speed of 2.5 revolutions per minute. Viscosity values of the dough material used in the present invention are those obtained with the dough at the time immediately prior to the deposition step.

### Example 1

### Preparation of dough material (brownie type)

The dough material for the first and second layers of dough material of a soft cake of the present invention was prepared from the material itemized in the following recipe (amounts in wt.%):

| | |
|---|---|
| Wheat flour | 8.0 |
| Sugar | 28.45 |
| Whole eggs | 18.0 |
| Oil | 11.0 |
| Anhydrous butter | 6.0 |
| Water | 2.7 |
| Glycerin | 1.5 |
| Cocoa powder | 2.0 |
| Baking powder | 0.4 |
| Flavor | 0.8 |
| Salt | 0.1 |
| Xanthane | 0.05 |
| Dark chocolate | 13.0 |
| Chocolate drops | 8.0 |
| Total | 100.0 |

The dough was prepared in a conventional manner, firstly blending and dissolving the sugar in the eggs, subsequently adding and blending the wheat flour and finally adding and
blending all remaining ingredients. The dough had a water activity Aw of 0.83.

### Preparation of filling material (brownie type)

The filling material for the filling layer of a soft cake of the present invention was a commercially available, bake stable chocolate filling having the following composition, as provided by the supplier (amounts in wt.%):

| | |
|---|---|
| Sugar | 82 |
| (dextrose, glucose syrup, sucrose and invert sugar) | |
| Skimmed milk powder | 4 |
| Cocoa powder | 6 |
| Starch | 2 |
| Water | 5 |
| Gelling agent | (to adjust viscosity) |
| Acidifying agent | (as needed) |
| Total | 100.0 |

The chocolate filling had a water activity Aw of 0.77.

### Deposition of dough/filling layers and baking/packaging

A sheet of baking paper of appropriate dimensions was placed on a baking tray. A first layer of the dough material was extruded via a sheet extrusion die and directly deposited at a thickness of 5 mm on the baking paper . Subsequently, a layer of the filling material was extruded with a second sheet extrusion die and directly deposited at a thickness of 1 mm on the first layer of the dough material. At this stage, depending on the type of soft cake, inclusions in the form of commercially available chocolate drops were optionally dispersed in an amount of 5 wt.%, based on the total weight of the soft cake before baking, on the layer of filling material. Finally, a second layer of the dough material was extruded via a third sheet extrusion die and directly deposited at a thickness of 5 mm on the layer of the filling material.

In a variation of the above deposition process, the layers of the dough material were produced by rolling between cylinders, followed by deposition.

A convection oven was pre-heated to 200°C. The tray with the deposited arrangement of dough layers and filling layer was placed in the oven, the temperature of the oven reduced to 170°C and the dough and filling baked for 17 minutes. After cooling, the final soft cake was cut into bite-sized pieces. After storage for three weeks, the soft cake had a water activity of 0.76.

### Sensory evaluation

The soft cake obtained in this example resembles a freshly baked brownie, both in visual appearance, taste and texture. In particular, the inner layer of filling material is not perceived as a separate layer, but appears as an inner part of a single dough layer with a higher moisture content and a slightly unbaked quality. Both after equilibration for three weeks and after storage for 1, 3 and 6 months, the visual and sensory assessment of this product has not substantially changed.

A sensory test was performed with a group of 14 trained experts who were asked to compare the sensory attributes of a conventional brownie, i.e. produced by baking a single layer of dough, with the brownie soft cake of the present invention. After stored in packaged condition for 7.5 months, the brownie soft cake of the present invention was less firm and crumbly in touch and more tender in bite and produced a soft and moist sensation in the mouth.

## Claims

1. A process for the manufacture of a shelf stable chocolate soft cake comprising the steps of
- depositing a first layer of dough material,
- depositing a layer of filling material on top of the first layer and
- depositing a second layer of dough material on top of the layer of filling material,
wherein at least one of the first and second layers of dough material is in direct contact with the layer of filling material, and
- baking the combined deposited layers to produce a soft cake, wherein the dough layers become cooked and the filling layer simulates an unbaked heart of dough,
wherein
the dough material comprises 5 to 35 wt.% of chocolate or the corresponding amount of cocoa powder,
the filling material is a chocolate filling comprising at least 1 wt.% of cocoa solids,
the water activity of the filling material is in the range of from 0.65 to 0.84,
the water activity of the soft cake is in the range of from 0.65 to 0.84,
the filling material is not a dough material, and when packaged, no development of mould is visible after storage of the soft cake at 25 °C for two months or more.

2. The process according to claim 1, wherein the filling material contains not more than 10 wt.% of uncooked starch, preferably not more than 5 wt.%.

3. The process according to claim 1 or 2, wherein the first and second layers of dough material are in direct contact with the layer of filling material.

4. The process according to any one of claims 1 to 3, further including a step of dispersing inclusions on the deposited layer of one or both of the first layer of dough material and the layer of filling material.

5. The process according to any one of claims 1 to 4, wherein the deposition and baking steps are carried out in a continuous manner on a band conveyor.

6. The process according to claim 5, wherein the first layer of dough material is deposited on a continuous baking paper.

7. The process according to any one of claims 1 to 6, wherein the combined deposited layers are pre-cut prior to the baking step.

8. The process according to any one of claims 1 to 7, wherein the thickness of the layer of filling material is adjusted such that it amounts to 5 to 50% of the thickness of the soft cake.

9. A shelf stable chocolate soft cake comprising a first layer of baked dough material, a layer of chocolate filling material on top of the first layer and a second layer of baked dough material on top of the layer of filling material, wherein the dough material comprises 5 to 35 wt.% of chocolate or the corresponding amount of cocoa powder, the chocolate filling material comprises at least 1 wt.% of cocoa solids and simulates an unbaked heart of dough, at least one of the first and second layers of baked dough material is in direct contact with the layer of filling material, the water activity of the soft cake is in the range of from 0.65 to 0.84, the filling material is not a dough material, the first and second layers of baked dough material and the layer of filling material have been produced in a combined baking step, and, when packaged, no development of mould is visible after storage of the soft cake at 25 °C for two months or more.

10. The soft cake according to claim 9, wherein the first and second layers of baked dough material are in direct contact with the layer of filling material.

11. The soft cake according to claim 9 or 10, wherein the soft cake is a brownie-type pastry, preferably containing from 5 to 30 wt.% of chocolate.

12. The soft cake according to any one of claims 9 to 11, wherein the filling material is an oil-in-water emulsion.

13. The soft cake according to any one of claims 9 to 12, which is obtained by the process according to any one of claims 1 to 8.

## Patentansprüche

1. Verfahren zum Herstellen eines lagerfesten Schokoladen Soft Cakes, das die folgenden Schritte umfasst
- Ablagern einer ersten Schicht von Teigmaterial,
- Ablagern einer Schicht aus Füllmaterial auf der ersten Schicht und
- Ablagern einer zweiten Schicht von Teigmaterial auf der Schicht aus Füllmaterial,
wobei mindestens eine der ersten und der zweiten Schicht von Teigmaterial in direktem Kontakt mit der Schicht aus Füllmaterial ist, und
- Backen der kombinierten abgelagerten Schichten, um einen Soft Cake zu erzeugen, wobei die Teigschichten gegart werden und die Füllungsschicht ein ungebackenes Herz aus Teig simuliert, wobei
das Teigmaterial 5 bis 35 Gew.-% Schokolade oder die entsprechende Menge Kakaopulver umfasst,
das Füllmaterial eine Schokoladenfüllung ist, die zu mindestens 1 Gew.-% Kakaofeststoffe umfasst,
die Wasseraktivität des Füllmaterials im Bereich von 0,65 bis 0,84 liegt,
die Wasseraktivität des Soft Cakes im Bereich von 0,65 bis 0,84 liegt,
das Füllmaterial kein Teigmaterial ist und nach der Verpackung keine Schimmelbildung nach Lagerung des Soft Cakes bei 25 °C für zwei Monate oder mehr sichtbar ist.

2. Verfahren nach Anspruch 1, wobei das Füllmaterial nicht mehr als 10 Gew.-% ungegarte Stärke enthält, vorzugsweise nicht mehr als 5 Gew.-%.

3. Verfahren nach Anspruch 1 oder 2, wobei die erste und die zweite Schicht aus Teigmaterial in direktem Kontakt mit der Schicht aus Füllmaterial sind.

4. Verfahren nach einem der Ansprüche 1 bis 3, das ferner einen Schritt des Dispergierens von Einschlüssen auf der abgelagerten Schicht von einer oder beiden der ersten Schicht aus Teigmaterial und der Schicht aus Füllmaterial einschließt.

5. Verfahren nach einem der Ansprüche 1 bis 4, wobei die Ablagerungs- und Backschritte auf eine kontinuierliche Weise auf einem Bandförderer durchgeführt werden.

6. Verfahren nach Anspruch 5, wobei die erste Schicht aus Teigmaterial auf einem kontinuierlichen Backpapier abgelagert wird.

7. Verfahren nach einem der Ansprüche 1 bis 6, wobei die kombinierten abgelagerten Schichten vor dem Backschritt vorgeschnitten werden.

8. Verfahren nach einem der Ansprüche 1 bis 7, wobei die Dicke der Schicht aus Füllmaterial so angepasst wird, dass sie 5 bis 50 % der Dicke des Soft Cakes ausmacht.

9. Lagerfester Schokoladen Soft Cake, umfassend eine erste Schicht aus gebackenem Teigmaterial, eine Schicht aus Schokoladen-Füllmaterial auf der ersten Schicht und eine zweite Schicht aus gebackenem Teigmaterial auf der Schicht aus Füllmaterial, wobei das Teigmaterial 5 bis 35 Gew.-% Schokolade oder die entsprechende Menge Kakaopulver umfasst, das Schokoladen-Füllmaterial mindestens 1 Gew.-% Kakaofeststoffe umfasst und ein ungebackenes Teigherz simuliert, mindestens eine der ersten und der zweiten Schicht aus gebackenem Teigmaterial in direktem Kontakt mit der Schicht aus Füllmaterial ist, die Wasseraktivität des Soft Cakes im Bereich von 0,65 bis 0,84 liegt, das Füllmaterial kein Teigmaterial ist, die erste und die zweite Schicht aus gebackenem Teigmaterial und die Schicht aus Füllmaterial in einem kombinierten Backschritt hergestellt wurden und nach der Verpackung keine Schimmelbildung nach Lagerung des Soft Cakes bei 25 °C für zwei Monate oder mehr sichtbar ist.

10. Soft Cake nach Anspruch 9, wobei die erste und die zweite Schicht aus Teigmaterial in direktem Kontakt mit der Schicht aus Füllmaterial sind.

11. Soft Cake nach Anspruch 9 oder 10, wobei der Soft Cake ein Brownieartiges Gebäck ist, das vorzugsweise von 5 bis 30 Gew.-% Schokolade enthält.

12. Soft Cake nach einem der Ansprüche 9 bis 11, wobei das Füllmaterial eine Öl-in-Wasser-Emulsion ist.

13. Soft Cake nach einem der Ansprüche 9 bis 12, der durch das Verfahren nach einem der Ansprüche 1 bis 8 erhalten wird.

## Revendications

1. Processus pour la fabrication d'un gâteau moelleux au chocolat de longue durée de conservation, comprenant les étapes consistant à
- déposer une première couche de matériau de pâte,
- déposer une couche de matériau de fourrage au-dessus de la première couche et
- déposer une deuxième couche de matériau de pâte au-dessus de la couche de matériau de fourrage,
dans lequel au moins l'une des première et deuxième couches de matériau de pâte est en contact direct avec la couche de matériau de fourrage, et
- cuire les couches déposées combinées pour produire un gâteau moelleux, dans lequel les couches de pâte deviennent cuites et la couche de fourrage simule un coeur de pâte non cuit, dans lequel
le matériau de pâte comprend 5 à 35 % en poids de chocolat ou la quantité correspondante de poudre de cacao,
le matériau de fourrage est un fourrage de chocolat comprenant au moins 1 % en poids de cacao solide,
l'activité de l'eau du matériau de fourrage est dans la plage allant de 0,65 à 0,84,
l'activité de l'eau du gâteau moelleux est dans la plage allant de 0,65 à 0,84,
le matériau de fourrage n'est pas-un matériau de pâte, et, lorsqu'il est emballé, aucun développement de moisissures n'est visible après stockage du gâteau moelleux à 25 °C pendant deux mois ou plus.

2. Processus selon la revendication 1, dans lequel le matériau de fourrage ne contient pas plus de 10 % en poids d'amidon non cuit, de préférence pas plus de 5 % en poids.

3. Processus selon la revendication 1 ou 2, dans lequel les première et deuxième couches de matériau de pâte sont en contact direct avec la couche de matériau de fourrage.

4. Processus selon l'une quelconque des revendications 1 à 3, incluant en outre une étape de dispersion d'inclusions sur la couche déposée de l'une et/ou l'autre de la première couche de matériau de pâte et de la couche de matériau de fourrage.

5. Processus selon l'une quelconque des revendications 1 à 4, dans lequel les étapes de dépôt et de cuisson sont réalisées d'une manière continue sur un convoyeur à bande.

6. Processus selon la revendication 5, dans lequel la première couche de matériau de pâte est déposée sur un papier de cuisson continu.

7. Processus selon l'une quelconque des revendications 1 à 6, dans lequel les couches déposées combinées sont prédécoupées avant l'étape de cuisson.

8. Processus selon l'une quelconque des revendications 1 à 7, dans lequel l'épaisseur de la couche de matériau de fourrage est ajustée de telle sorte qu'elle s'élève à 5 à 50 % de l'épaisseur du gâteau moelleux.

9. Gâteau moelleux au chocolat de longue durée de conservation comprenant une première couche de matériau de pâte cuit, une couche de matériau de fourrage de chocolat au-dessus de la première couche et une deuxième couche de matériau de pâte cuit au-dessus de la couche de matériau de fourrage, dans lequel le matériau de pâte comprend 5 à 35 % en poids de chocolat ou la quantité correspondante de poudre de cacao, le matériau de fourrage de chocolat comprend au moins 1 % en poids de cacao solide et simule un coeur de pâte non cuit, au moins une des première et deuxième couches de matériau de pâte cuit est en contact direct avec la couche de matériau de fourrage, l'activité de l'eau du gâteau moelleux est dans la plage allant de 0,65 à 0,84, le matériau de fourrage n'est pas un matériau de pâte, les première et deuxième couches de matériau de pâte cuit et la couche de matériau de fourrage ont été produites dans une étape de cuisson combinée et, lorsqu'il est emballé, aucun développement de moisissures n'est visible après stockage du gâteau moelleux à 25 °C pendant deux mois ou plus.

10. Gâteau moelleux selon la revendication 9, dans lequel les première et deuxième couches de matériau de pâte cuit sont en contact direct avec la couche de matériau de fourrage.

11. Gâteau moelleux selon la revendication 9 ou 10, où le gâteau moelleux est une pâtisserie de type brownie, contenant de préférence de 5 à 30 % en poids de chocolat.

12. Gâteau moelleux selon l'une quelconque des revendications 9 à 11, dans lequel le matériau de fourrage est une émulsion huile-dans-eau.

13. Gâteau moelleux selon l'une quelconque des revendications 9 à 12, qui est obtenu par le processus selon l'une quelconque des revendications 1 à 8.
